# EUROPEAN PATENT SPECIFICATION

(11) **EP 1 086 598 B1**
(45) Date of publication and mention of the grant of the patent: **26.07.2006**
(21) Application number: 99931287.9
(22) Date of filing: 11.06.1999
(51) Int. Cl.: H04Q 7/22

(54) **PROCEDURE AND SYSTEM FOR SENDING A SHORT MESSAGE**
VERFAHREN UND SYSTEM ZUM SENDEN EINER KURZNACHRICHT
PROCEDURE ET SYSTEME D'ENVOI D'UN MESSAGE COURT

(30) Priority: 12.06.1998 FI 981368
(43) Date of publication of application: 28.03.2001
(73) Proprietor: TeliaSonera Finland Oyj, 00510 Helsinki (FI)
(72) Inventor: LEHTO, Mariette, FIN-00530 Helsinki (FI)
(74) Representative: Simmelvuo, Markku Kalevi
(86) International application number: PCT/FI1999/000513
(87) International publication number: WO 1999/066745

(56) References cited:
- WO-A1-96/13814
- WO-A1-97/19568
- WO-A1-97/20443
- WO-A1-97/36437
- WO-A1-98/11744
- WO-A2-98/30051

## Description

### FIELD OF THE INVENTION

The present invention concerns a procedure as defined in the preamble of claim 1 and to a system as defined in the preamble of claim 5 for sending a reply to an area-specific short message.

### BACKGROUND OF THE INVENTION

In mobile communication systems, a known practice is to send messages in the form of text. One of the text message types is a message intended for a given telecommunication terminal, sent from or terminating at a given mobile station. Another type is the so-called cell broadcast message, which is sent to all mobile stations within a given area. Hereinafter, short message refers to all messages sent in the form of text in a telecommunication network. These include messages in e.g. USSD (Unstructured Supplementary Service Data) and SMS (Short Message Service) formats.

Furthermore, in prior art, area-specific short messages are sent using a certain transmission channel. Different transmission channels are used for sending different information. As a main rule, a mobile subscriber can select the channels from which he/she wants to receive area-specific broadcast messages. In other words, the subscriber can select the type of information he/she wishes to receive on his/her mobile station.

A problem with the above-mentioned method is that a subscriber who has received an area-specific broadcast message on his/her terminal cannot send a reply to the message without knowing the number from which the message has been sent. A further problem with this method is that, even if the number should be known, replying to the message is still laborious.

Document WO 9736437 discloses a method and apparatus which can be used to request and receive subscriber specific data (e.g. credit card information) stored in certain SIM (Subscriber Identification Module) card via mobile telecommunication network using the connectionless signals. The mobile communication network sends, for example, USSD or SMS message that request the specific stored information. The application module connected to the mobile terminal receives the request, seeks the requested information from the SIM card and sends the information to the network that requested the information. If the requested message is a SMS message, then it will comprise a return address so that the requested information can be sent to the right connection of the network. The return address is not needed when USSD messages are used because the separate data encoding method will report to the application module that the purpose of the message is to request the data stored on the SIM card.

### BRIEF DESCRIPTION OF THE INVENTION

The object of the present invention is to eliminate the drawbacks described above or at least to significantly alleviate them.

A specific object of the present invention is to disclose a new type of procedure and system for replying to an area-specific broadcast message.

As for the features characteristic of the present invention, reference is made to the claims.

In the method of the invention, a reply to an area-specific broadcast short message is sent in a telecommunication system. The telecommunication system comprises a telecommunication network, a short-message service centre, a cell broadcast centre and a telecommunication terminal with a subscriber identity module or equivalent connected to it, containing storage areas for the storage of subscriber/telephone network information.

According to the invention, the identifiers of the transmission channels for area-specific broadcast short messages and the corresponding response data are stored in a table. Further, according to the invention, when a telecommunication terminal receives an area-specific broadcast short message, it is identified by the channel identifier, and the response data corresponding to the channel is retrieved from the table. Using the response data, the short-message service centre routes the reply formed on and sent from the telecommunication terminal to the correct address. The response data of the invention may consist of e.g. reply numbers or function codes, which may also be used to carry other information besides message routing information.

In an embodiment of the procedure, the table is placed in the telecommunication terminal, in the subscriber identity module or in an external smart card. The table can also be placed in distributed form in all or some of the above-mentioned locations. An external smart card functions as a parallel subscriber identity module.

In an embodiment of the procedure, the response data is retrieved from the table either when an area-specific broadcast short message is being received, when it is being read or when the terminal is sending a reply.

In an embodiment of the procedure, the reply to the short message is routed on the basis of the response data to the party having sent the area-specific broadcast short message via the cell broadcast centre. The routing in the short-message service centre is effected e.g. directly on the basis of the reply number or e.g. on the basis of routing data given in a function code.

The system of the invention for sending a reply to an area-specific broadcast short message in a telecommunication system comprises a telecommunication network, a short-message service centre, a cell broadcast centre and a telecommunication terminal with a subscriber identity module or equivalent connected to it, containing storage areas for the storage of subscriber/telephone network information.

According to the invention, the system comprises, in the telecommunication terminal, means, arranged to receive an area-specific broadcast short message and to identify the area-specific broadcast short message by a channel identifier, storing means arranged to store the identifiers of the transmission channels for area-specific broadcast short messages and the corresponding response data in a table, and retrieving means arranged to retrieve the response data corresponding to the channel from the table (T) which data is used by the short-message service centre (SMS-C) to route the reply sent by the telecommunication terminal (MS) to the correct address.

In an embodiment of the system, the system comprises means for maintaining the data in the table.

In an embodiment of the system, the short-message service centre comprises means for routing the reply to a short message on the basis of the response data to the party having sent the area-specific broadcast short message via the cell broadcast centre.

The invention makes it easier to reply to area-specific short messages. The user of the telecommunication terminal need not know the original address of the sender of an area-specific short message received.

The invention makes it possible to implement a service network between the subscriber's terminal, the telecommunication network and the provider of telecommunication services. Furthermore, the invention gives telecommunication service providers better chances to produce e.g. commercial applications.

### BRIEF DESCRIPTION OF ILLUSTRATIONS

In the following, the invention will be described in detail by the aid of a few examples of its embodiments, wherein
Fig. 1 presents an embodiment of the system of the invention, and
Fig. 2 presents an operating diagram for the embodiment in Fig. 1.

### DETAILED DESCRIPTION OF THE INVENTION

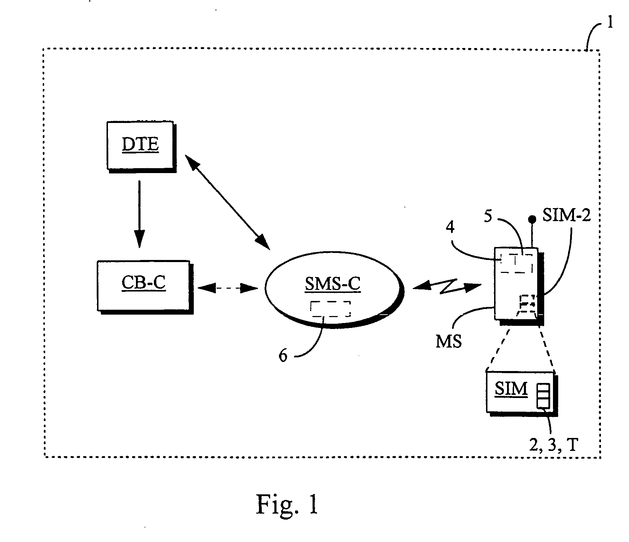

The telecommunication system illustrated in Fig. 1 comprises a telecommunication network 1, which in the case of this example is a mobile communication network 1. In addition, the system presented in Fig. 1 comprises a short-message service centre SMS-C, a cell broadcast centre CB-C and a data terminal equipment DTE generating cell broadcast messages. Moreover, the system according to Fig. 1 comprises a telecommunication terminal MS with a subscriber identity module SIM or equivalent connected to it, said subscriber identity module being provided with storage areas 2, 3 for the storage of subscriber/telephone network information. In the storage areas 2, 3 on the subscriber identity module SIM, a space for a table T is provided. In addition, an external smart card SIM-2 is connected to the telecommunication terminal MS.

In an embodiment according to Fig. 1, the data terminal equipment DTE sends an area-specific short message to all mobile stations located in a certain area. The data terminal equipment DTE sends the short message to the cell broadcast centre CB-C. The cell broadcast centre CB-C further directs the message to all telecommunication terminals MS located in the area of the cell concerned that are capable of receiving short messages in text form over the channel defined in the transmission. In the present example, the transmission of area-specific short messages is effected using a cell-specific cell broadcast channel (CBCH).

The mobile subscriber receives the short message on his/her telecommunication terminal MS and reads its contents from the display of the terminal. The terminal MS comprises means 5 for performing a search to find response data corresponding to the cell broadcast channel. These means are implemented in a manner known to the skilled person. In the case of the example, the search for the response data is performed immediately upon receiving the area-specific message.

In the case of the example, the response data are stored in a table T, which is located in the subscriber identity module SIM. The telecommunication terminal MS comprises means 4 for storing information in the table. These means 4 are implemented in a manner known in itself and they will therefore not be described in detail. The table T is stored e.g. before the subscriber buys his/her mobile station or before he/she is registered as a client of a mobile communications operator. The table T can be updated any time when the subscriber so desires. The table may also be updated automatically via the telecommunication network 1, utilising e.g. SMS (short-message service) or USSD (Unstructured Supplementary Service Data).

The mobile subscriber wants to send a reply the short message. Replying is effected e.g. by pressing a "Reply" button on the telecommunication terminal MS. After this, the mobile subscriber enters the reply message and confirms it. The actions to be performed on the telecommunication terminal MS can be implemented in many ways known to the skilled person, depending on the terminal type and its user interface.

The telecommunication terminal MS converts the reply into a required form appropriate for the mobile communication network 1 and sends it to the short-message service centre SMS-C of the network. The short-message service centre SMS-C routes the short message reply to the right address in accordance with the response data retrieved from the table T. The response data may consist of e.g. reply numbers or function codes which are to be appended to the short message reply and which can also be used to carry other information besides message routing information.

The short-message service centre SMS-C needs to be provided with means 6 for finding the right response data in a short message and means for executing the right functions. In the case of the example, these means 6 are implemented as software applications.

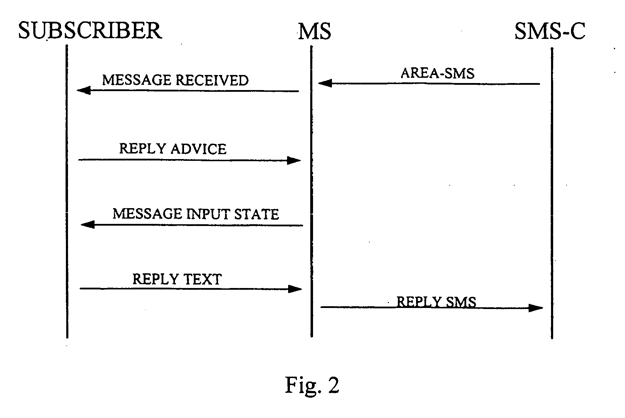

The actions in the above example can be presented in a functional diagram as shown in Fig. 2.

The procedure illustrated in Fig. 2 is started when the short-message service centre SMS-C sends over the cell broadcast channel an area-specific short message AREA-SMS it has received from the cell broadcast centre CB-C to the mobile subscriber's telecommunication terminal MS. The terminal MS receives the message and stores the channel number corresponding to it in memory or retrieves the response data corresponding to the channel number immediately from the table T. The terminal MS gives the subscriber an indication of a message received (MESSAGE RECEIVED).

The mobile subscriber reads the area-specific short message on the display of his/her telecommunication terminal MS and indicates that he/she wishes to reply to the message (REPLY ADVICE). This is done e.g. by pressing a "Reply" button.

The telecommunication terminal MS activates a message input state (MESSAGE INPUT STATE), and the subscriber enters a desired reply message. Having entered the message, the subscriber confirms it and then presses a "Send" button (REPLY TEXT) on his/her telecommunication terminal MS.

The terminal MS converts the reply text into a required form appropriate for the mobile communication network and appends to it the response data retrieved from the table T. Finally, the terminal sends the information as a short message to the short-message service centre SMS-C (REPLY SMS), which routes the reply further to the address indicated by the response data.

In a system according to this example, the short-message service centre SMS-C may also communicate with other systems connected to the mobile communication network 1.

In a system as illustrated in the example, the telecommunication connection between the [cell broadcast centre] short-message service centre SMS-C and the cell broadcast centre CB-C may also be routed via a network application. This is to say that the telecommunication connections mentioned in the example need not be direct connections.

The invention is not restricted to the examples of its embodiments described above, but many variations are possible within the scope of the inventive idea defined in the claims

## Claims

1. Procedure for replying to an area-specific broadcast short message in a telecommunication system comprising a telecommunication network (1), a short-message service centre (SMS-C), a cell broadcast centre (CB-C) and a telecommunication terminal (MS) with a subscriber identity module (SIM) connected to it, said subscriber identity module being provided with storage areas (2, 3) for the storage of subscriber/telephone network information, **characterised in that** the identifiers of the transmission channels for area-specific broadcast short messages and the corresponding response data are stored in a table (T) so that when the telecommunication terminal (MS) receives the area-specific broadcast short message, it is identified by the channel identifier and the response data corresponding to the channel is retrieved from the table (T), which data is used by the short-message service centre (SMS-C) to route the reply sent by the telecommunication terminal (MS) to the correct address.

2. Procedure as defined in claim 1, **characterised in that** the table (T) is placed in the telecommunication terminal (MS), in the subscriber identity module (SIM), on an external smart card (SIM-2) or the table (T) is distributed in all or some of the locations mentioned.

3. Procedure as defined in claim 1 or 2, **characterised in that** the response data is retrieved from the table (T) either when the area-specific broadcast short message is being received, when it is being read or when the telecommunication terminal (MS) is sending a reply.

4. Procedure as defined in any one of claims 1 - 3, **characterised in that** the short message is routed on the basis of the response data via the short-message service centre (SMS-C) to the party having sent the area-specific broadcast short message via the cell broadcast centre (CB-C).

5. System for replying to an area-specific broadcast short message in a telecommunication system comprising a telecommunication network (1), a short-message service centre (SMS-C), a cell broadcast centre (CB-C) and a telecommunication terminal (MS) with a subscriber identity module (SIM) connected to it, said subscriber identity module being provided with storage areas (2, 3) for the storage of subscriber/telephone network information, **characterised in that** the system further comprises, in the telecommunication terminal (MS):
means arranged to receive an area-specific broadcast short message and to identify the area-specific broadcast short message by a channel identifier;
means (4) arranged to store the identifiers of the transmission channels for area-specific broadcast short messages and the corresponding response data in a table (T); and
means (5) arranged to retrieve the response data corresponding to the channel from the table (T) which data is used by the short-message service centre (SMS-C) to route the reply sent by the telecommunication terminal (MS) to the correct address.

6. System as defined in claim 5, **characterised in that** the system comprises means (SIM, SIM-2, MS) for maintaining the data in the table (T).

7. System as defined in any one of claims 5 or 6, **characterised in that** the short-message service centre (SMS-C) comprises means (6) for routing the short message reply on the basis of the response data to the party having sent the area-specific broadcast short message via the cell broadcast centre (CB-C).

## Patentansprüche

1. Verfahren zum Antworten auf eine bereichsspezifische bzw. ortsspezifische Funkkurznachricht in einem Telekommunikationssystem, welches aufweist: ein Telekommunikationsnetzwerk (1), ein Kurznachricht-Service-Zentrum (SMS-C), ein Zellenfunkzentrum (CB-C) und ein Telekommunikationsendgerät (MS) mit einem Teilnehmeridentitätsmodul (SIM), welches mit ihm verbunden ist, wobei das Teilnehmeridentitätsmodul mit Speicherbereichen (2, 3) zum Speichern von Teilnehmer/Telefon-Netzwerkinformation ausgestattet ist, **dadurch gekennzeichnet, dass** die Kennungen der Übertragungskanäle für bereichsspezifische Funkkurznachrichten und die entsprechenden Antwortdaten in einer Tabelle (T) gespeichert werden, so dass, wenn das Telekommunikationsendgerät (MS) die bereichsspezifische Funkkurznachricht erhält, es durch die Kanalkennung identifiziert wird und die Antwortdaten, welche dem Kanal entsprechen, von der Tabelle (T) wiedergewonnen werden, wobei die Daten durch das Kurznachricht-Service-Zentrum (SMS-C) benutzt werden, um die Antwort, welche durch das Telekommunikationsendgerät (MS) gesendet wurde, an die richtige Adresse zu leiten.

2. Verfahren nach Anspruch 1, **dadurch gekennzeichnet, dass** die Tabelle (T) in dem Telekommunikationsendgerät (MS), in dem Teilnehmeridentitätsmodul (SIM), auf einer externen Smart- bzw. Speicherkarte (SIM-2) platziert ist oder die Tabelle (T) an alle oder einige der erwähnten Stellen verteilt ist.

3. Verfahren nach Anspruch 1 oder 2, **dadurch gekennzeichnet, dass** die Antwortdaten von der Tabelle (T) entweder rückgewonnen werden, wenn die bereichsspezifische Funkkurznachricht empfangen wird, wenn sie gelesen wird oder wenn das Telekommunikationsendgerät (MS) eine Antwort sendet.

4. Verfahren nach einem der Ansprüche 1-3, **dadurch gekennzeichnet, dass** die Kurznachricht auf der Grundlage der Antwortdaten über das Kurznachricht-Service-Zentrum (SMS-C) an die Partei geleitet wird, welche die bereichsspezifische Funkkurznachricht über das Zellfunkzentrum (CB-C) gesandt hat.

5. System zum Antworten auf eine bereichsspezifische Funkkurznachricht in einem Telekommunikationssystem, welches aufweist: ein Telekommunikationsnetzwerk (1), ein Kurznachricht-Service-Zentrum (SMS-C), ein Zellfunkzentrum (CB-C) und ein Telekommunikationsendgerät (MS) mit einem Teilnehmeridentitätsmodul (SIM), welches mit ihm verbunden ist, wobei das Teilnehmeridentitätsmodul mit Speicherbereichen (2, 3) zum Speichern von Teilnehmer/Telefon-Netzwerkinformation ausgestattet ist, **dadurch gekennzeichnet, dass** das System in dem Telekommunikationsendgerät (MS) aufweist: eine Vorrichtung, welche angeordnet ist, um eine bereichsspezifische Funkkurznachricht zu empfangen und um die bereichsspezifische Funkkurznachricht durch eine Kanalkennung zu identifizieren;
eine Vorrichtung (4), welche angeordnet ist, um die Kennungen der Übertragungskanäle für die bereichsspezifischen Funkkurznachrichten und die entsprechenden Antwortdaten in einer Tabelle (T) zu speichern; und
eine Vorrichtung (5), welche angeordnet ist, um die Antwortdaten, welche dem Kanal aus der Tabelle (T) entsprechen, wiederzugewinnen, wobei die Daten durch das Kurznachricht-Service-Zentrum (SMS-C) genutzt werden, um die Antwort, welche durch das Telekommunikationsendgerät (MS) gesendet wird, an die korrekte Adresse zu leiten.

6. System nach Anspruch 5, **dadurch gekennzeichnet, dass** das System eine Vorrichtung (SIM, SIM-2, MS) aufweist, um die Daten in der Tabelle (T) zu pflegen.

7. System nach einem der Ansprüche 5 oder 6, **dadurch gekennzeichnet, dass** das Kurznachrichten-Service-Zentrum (SMS-C) eine Vorrichtung (6) aufweist, um die Kurznachrichtantwort auf der Grundlage der Antwortdaten an die Partei zu leiten, welche die bereichsspezifische Funkkurznachricht über das Zellfunkzentrum (CB-C) gesandt hat.

## Revendications

1. Procédure pour répondre à un message court à diffusion dans une zone spécifique dans un système de télécommunications comprenant un réseau de télécommunications (1), un centre de service de messages courts (SMS-C), un centre de diffusion cellulaire (CB-C) et un terminal de télécommunications (MS) avec un module d'identification d'abonné (SIM) connecté à celui-ci, ledit module d'identification d'abonné étant pourvu de zones de stockage (2, 3) pour le stockage d'informations de réseau d'abonné/téléphone, **caractérisé en ce que** les identifiants des canaux de transmission pour les messages cours à diffusion dans une zone spécifique et les données de réponse correspondantes sont stockées dans une table (T) de sorte que lorsque le terminal de télécommunications (MS) reçoit le message court à diffusion dans une zone spécifique, il est identifié par l'identifiant de canal et les données de réponse correspondant au canal sont extraites de la table (T), ces données sont utilisées par le centre de service de messages courts (SMS-C) pour acheminer la réponse envoyée par le terminal de télécommunications (MS) à l'adresse correcte.

2. Procédure selon la revendication 1, **caractérisée en ce que** la table (T) est placée dans le terminal de télécommunications (MS), dans le module d'identification d'abonné (SIM), ou sur une carte à puce intelligente externe (SIM-2) ou bien la table (T) est distribuée dans l'ensemble ou une partie des emplacements mentionnés.

3. Procédure selon la revendication 1 ou 2, **caractérisée en ce que** les données de réponse sont extraites de la table (T) lorsque le message court à diffusion dans une zone spécifique est reçu, lorsqu'il est lu ou lorsque le terminal de télécommunications (MS) envoie une réponse.

4. Procédure selon l'une quelconque des revendications 1 à 3, **caractérisée en ce que** le message court est acheminé sur la base des données de réponse par l'intermédiaire du centre de service de messages courts (SMS-C) à la partie ayant envoyé le message court à diffusion dans une zone spécifique par l'intermédiaire du centre de diffusion cellulaire (CB-C).

5. Système pour répondre à un message court à diffusion dans une zone spécifique dans un système de télécommunications comprenant un réseau de télécommunications (1), un centre de service de messages courts (SMS-C), un centre de diffusion cellulaire (CB-C) et un terminal de télécommunications (MS) avec un module d'identification d'abonné (SIM) connecté à celui-ci, ledit module d'identification d'abonné étant pourvu de zones de stockage (2, 3) pour le stockage d'informations de réseau d'abonné/téléphone, **caractérisé en ce que** le système comprend en outre, dans le terminal de télécommunications (MS) : des moyens configurés pour recevoir un message court à diffusion dans une zone spécifique et pour identifier le message court à diffusion dans une zone spécifique par un identifiant de canal ;
des moyens (4) configurés pour stocker les identifiants des canaux de transmission pour les messages courts à diffusion dans une zone spécifique et les données de réponse correspondantes dans une table (T) ; et
des moyens (5) configurés pour extraire les données de réponse correspondantes vers le canal depuis la table (T), ces données étant utilisées par le centre de service de messages courts (SMS-C) pour acheminer la réponse envoyée par le terminal de télécommunications (MS) à l'adresse correcte.

6. Système selon la revendication 5, **caractérisé en ce que** le système comprend des moyens (SIM, SIM-2, MS) pour maintenir les données dans la table (T).

7. Système selon l'une quelconque des revendications 5 ou 6, **caractérisé en ce que** le centre de service de messages courts (SMS-C) comprend des moyens (6) pour acheminer la réponse au message court sur la base des données de réponse vers la partie ayant envoyé le message court à diffusion dans une zone spécifique par l'intermédiaire du centre de diffusion cellulaire (CB-C).
